# FASCICULE DE BREVET EUROPEEN

(11) **EP 3 075 441 B1**
(45) Date de publication et mention de la délivrance du brevet: **05.10.2022**
(21) Numéro de dépôt: 15162482.2
(22) Date de dépôt: 02.04.2015
(51) Int. Cl.: B01F 23/53, B01F 27/81

(54) **APPAREIL PERFECTIONNE DE DISPERSION DE POLYMERE HYDROSOLUBLE**
PERFEKTIONIERTES DISPERSIONSGERÄT FÜR WASSERLÖSLICHES POLYMER
IMPROVED APPARATUS FOR DISPERSING A WATER-SOLUBLE POLYMER

(43) Date de publication de la demande: 05.10.2016
(73) Titulaire: SPCM SA, 42160 Andrézieux-Bouthéon (FR)
(72) Inventeur: Bonnier, Julien, 42000 SAINT ETIENNE (FR); Pich, Emmanuel, 42270 SAINT PRIEST EN JAREZ (FR)
(74) Mandataire: Cabinet Laurent & Charras

(56) Documents cités:
- WO-A1-2011/107683
- US-A- 6 000 840

## Description

Les polyacrylamides sont employés en quantité croissante dans la récupération assistée du pétrole (RAP).

Jusqu'à récemment, des installations de taille importante destinées à la dissolution de polyacrylamides traitaient quelques dizaines de kilos à l'heure. Le problème du mouillage initial de la poudre, qui a une tendance élevée à s'agglomérer, était résolu par des moyens simples (éjecteurs, pelles de mouillage, buses dans un tube ...). Ces moyens permettent d'obtenir des faibles débits à des concentrations faibles (0,5%) et des temps de dissolution longs (1 heure pour des poudres standard de granulométrie inférieure à 1 mm).

Le document WO 2011/107683 décrit un appareil (PSU pour Polymer Slicing Unit) permettant à la fois de broyer et de disperser la poudre dans l'eau de dissolution. Cet appareil comprend un rotor avec des lames tranchantes et un stator à fentes fines. Ces fentes, suivant leur épaisseur, permettent de broyer plus ou moins finement la poudre. Avec des fentes de 200 µ, la dissolution est presque instantanée, mais le débit est faible. Des fentes d'environ 700 microns permettent de réduire le temps de dissolution à 30 minutes et d'obtenir des concentrations très élevées de l'ordre de 20 gr/litre. Ces fortes concentrations permettent de diminuer fortement la taille des cuves de dissolution et des pompes doseuses avec, comme avantage, une diminution forte des investissements correspondants.

Le stator de cet appareil comporte des fentes découpées au jet d'eau fin à très haute pression (2 000 bars) ou au laser.

L'inconvénient de ce type de stator est qu'il engendre des vibrations de l'appareil générant une usure prématurée des roulements. Cette usure a des conséquences sur le bon fonctionnement de l'appareil et sur sa capacité à dissoudre des grandes quantités de polymère. L'objectif de cette invention est de proposer un appareil dans lequel les vibrations sont réduites. Un autre objectif est de disperser des quantités encore plus grandes de polymère hydrosoluble dans un temps réduit.

La demanderesse a constaté que pour diminuer ces vibrations néfastes, il était nécessaire que les fentes du stator soient inclinés d'un angle compris entre 20° et 80° par rapport au plan horizontal du stator.

Le plan horizontal du stator correspond également au plan horizontal du rotor.

En d'autres termes, l'invention a pour objet un dispositif pour la mise en dispersion d'un polymère hydrosoluble de granulométrie inférieure à 1.5 mm comprenant :
- un cône de mouillage dans lequel est dosé le polymère, ledit cône étant connecté à un circuit d'arrivée d'eau primaire,
- à l'extrémité inférieure du cône :
   o une chambre de broyage et d'évacuation du polymère dispersé comprenant :
      ▪ un rotor entraîné par un moteur et muni de couteaux,
      ▪ un stator fixe comprenant des fentes d'une largeur comprise avantageusement entre 50 et 1200 microns,
   o sur toute ou partie de la périphérie de la chambre, une couronne alimentée par un circuit d'eau secondaire, la couronne communiquant avec la chambre de telle sorte à assurer la pulvérisation d'eau sous pression sur le stator.

Le dispositif se caractérise en ce que les fentes du stator sont inclinés d'un angle compris entre 20° et 80° par rapport au plan horizontal du stator.

Dans un mode de réalisation préféré, l'angle entre les couteaux du rotor et/ou les fentes du stator par rapport au plan horizontal est d'au moins 30°. Cet angle est inférieur à 70°, préférentiellement inférieure à 60°. Préférentiellement cet angle est compris entre 30 et 70°, de préférence entre 40° et 60°.

Les fentes inclinées sont réalisées en découpant les fentes du stator en biais suivant la technique de découpe à jet d'eau très haute pression ou laser. Les couteaux sont inclinés en inclinant les couteaux du rotor par usinage spécifique.

Les fentes sont rectilignes et parallèles les unes avec les autres. Dans un mode particulier de l'invention, les fentes combinent une succession de courbures, éventuellement séparées de portions rectilignes. Dans ce cas, l'angle est calculé entre la droite reliant les deux extrémités de la fente par rapport au plan horizontal du stator.

Dans un exemple ne faisant pas partie de la présente invention, lorsque les fentes et les couteaux sont inclinés, les deux inclinaisons sont opposées, avantageusement de manière symétrique. Plus précisément, si les fentes sont inclinées d'un côté par rapport au plan horizontal du stator, alors les couteaux sont inclinés de l'autre côté. Avantageusement, l'angle formé par les couteaux et les fentes par rapport au plan horizontal est identique.

Les fentes du stator sont inclinées et les couteaux du rotor sont perpendiculaires au plan horizontal du stator.

Le stator se présente sous la forme d'un cylindre dans la paroi duquel sont découpées des fentes réalisées sur partie de la hauteur de ladite paroi, les fentes ayant une largeur comprise entre 50 et 1200 microns. La paroi du stator a préférentiellement une épaisseur comprise entre 5 mm et 30 mm, et plus préférentiellement entre 10 et 20 mm. La hauteur du stator est préférentiellement comprise entre 10 mm et 150 mm, plus préférentiellement entre 20 et 100 mm. Le diamètre du stator est préférentiellement compris entre 100 et 500 mm.

Le nombre de fentes du stator est préférentiellement compris entre 20 et 1500, avantageusement de 50 à 1500, plus préférentiellement compris entre 50 et 1000.

Dans un mode de réalisation préféré, les fentes du stator sont espacées régulièrement les unes des autres d'une distance comprise entre 1 et 50 mm. Elles sont parallèles entre elles.

Les fentes ont généralement une longueur comprise entre 10 mm et 100 mm, même si il est possible d'avoir des fentes plus longues. Dans le cas de fentes de longueur supérieur à 25 mm, il est possible de les découper en 2, 3 ou 4 parties, préférentiellement de longueurs égales. Dans un mode de réalisation particulier, les parois internes des fentes sont inclinées de manière à créer des arêtes tranchantes sur chaque fente.

La distance séparant l'extrémité libre des couteaux du rotor des fentes du stator est comprise entre 50 et 300 microns, de préférence entre 100 et 200 microns, en pratique de l'ordre de 100 microns. Dans un exemple ne faisant pas partie de la présente invention, lorsque les couteaux sont inclinés et que leur face latérale en regard de la paroi du stator est plane, la distance séparant l'extrémité libre des couteaux, des fentes du stator varie. Ceci est dû au fait que viennent en regard l'un de l'autre une surface plane (celle des couteaux) et une surface arrondie (celle du stator). En effet la distance entre l'extrémité libre du couteau et le stator est plus faible aux extrémités hautes et basses du couteau, alors qu'elle est plus importante au centre. Dans tous les cas, elle est comprise entre 50 et 300 microns. Dans un mode de réalisation particulier, la face latérale des couteaux en regard de la paroi du stator est courbée dans le même sens que la courbe du stator. De la sorte, on limite, voire on annule cette différence de distance entre les couteaux et les fentes.

De même, la face inclinée de chaque couteau reliant le centre du rotor à la périphérie est de forme générale arrondie. Une telle configuration permet de mieux évacuer le polymère.

Dans un mode de réalisation préféré, les couteaux du rotor au moins en partie, et le stator sont réalisés en un acier inoxydable choisi parmi les aciers austéno-ferritique ou austénitique traité par nitruration sous vide ou par diffusion de carbone sous vide.

La découpe du stator est réalisée par découpe à jet d'eau à très haute pression contenant un abrasif, à une pression comprise entre 2000 et 5000 bars, de préférence entre 2000 et 3000 bars.

Le rotor est constitué :
- soit d'un support à la surface duquel les couteaux sont formés par fraisage. Dans ce cas, le rotor est réalisé dans sa totalité dans l'un des matériaux précités ;
- soit d'un support à la surface duquel sont rapportés des couteaux, les couteaux comprenant une plaquette sur laquelle est rapportée une lame réalisée en carbure de tungstène.

Le rotor est équipé de 2 à 20 couteaux, avantageusement entre 4 et 12. Néanmoins, en fonction du diamètre du rotor, le nombre de couteaux pourra varier. A titre d'exemple, il est de 9 pour un diamètre du rotor de 200 mm.

Par ailleurs et selon une autre caractéristique, les couteaux sont éventuellement plus ou moins décalés par rapport au rayon du rotor. Avantageusement, ce décalage est compris entre 1 et 15°, de préférence entre 2 et 10°.

Selon un mode particulier de l'invention, le cône de mouillage est disposé de manière verticale et la chambre de broyage est disposée de manière verticale, l'un et l'autre étant connecté par un conduit sous forme de coude ayant un angle de 90°. Cette configuration est particulièrement adaptée lorsque le dispositif est de taille importante.

L'invention et les avantages qui en découlent ressortiront bien des exemples de réalisation suivant à l'appui des figures annexées.
La figure 1 est une vue schématique latérale du dispositif de l'invention.
La figure 2 est une vue en section selon la ligne AA'.
La figure 3 est une vue schématique latérale du stator du dispositif de l'invention dans lequel les fentes sont inclinées par rapport au plan horizontal du stator.
La figure 4 est une vue schématique en trois dimensions du stator du dispositif de l'invention dans lequel les fentes sont inclinées par rapport au plan horizontal du stator.
La figure 5 est une vue de dessus d'un rotor ne faisant pas partie de la présente invention dans lequel les couteaux sont inclinés par rapport au plan horizontal du stator.
La figure 6 est une vue en trois dimensions d'un rotor ne faisant pas partie de la présente invention dans lequel les couteaux sont inclinés par rapport au plan horizontal du stator.

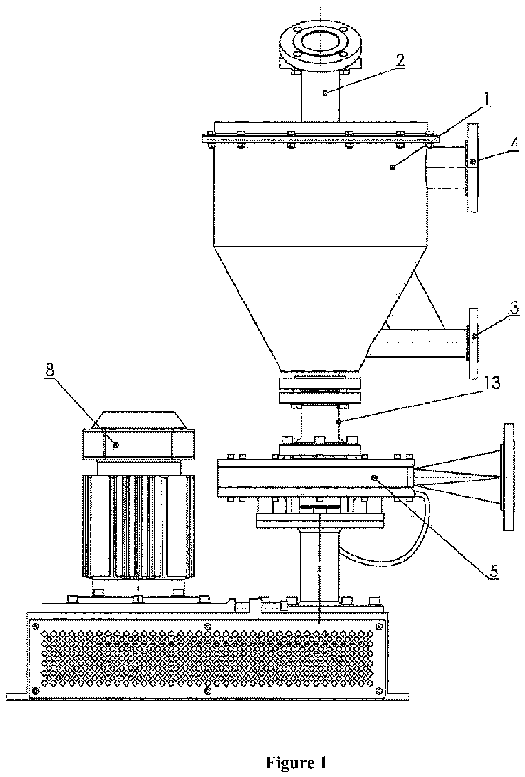

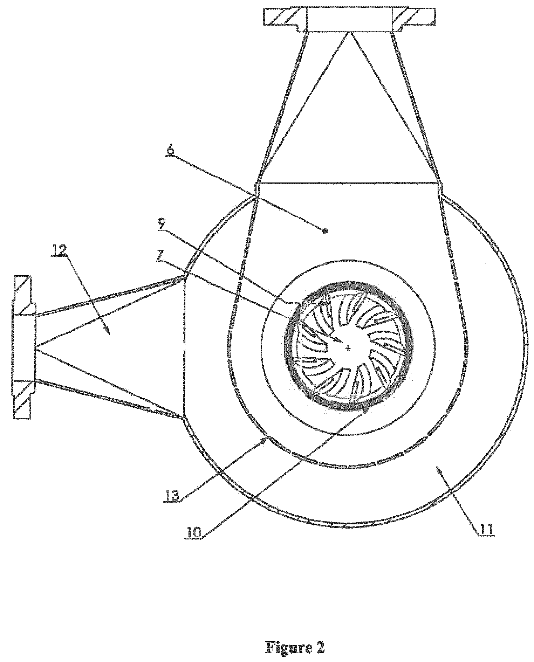

Conformément à la figure 1, le dispositif de l'invention comprend :
- un cône de mouillage (1) connecté à son sommet à une colonne (2) dosant le polymère de granulométrie standard, le plus souvent par l'intermédiaire d'une vis doseuse, le cône (1) étant connecté dans sa partie inférieure à un circuit d'arrivée d'eau primaire (3) lequel alimente une surverse (4),
- à l'extrémité inférieure du cône, un ensemble (5) comprenant :
   ∘ une chambre de broyage et d'évacuation (6) (figure 2) du polymère dispersé comprenant :
      ▪ un rotor (7) entraîné par un moteur (8) muni de couteaux (9),
      ▪ un stator (10),
   o sur toute ou partie de la périphérie de la chambre, une couronne (11) alimentée par un circuit d'eau secondaire (12), la couronne (11) communiquant avec la chambre (6) par le biais de fentes (13) assurant la pulvérisation d'eau sous pression sur le stator (10).

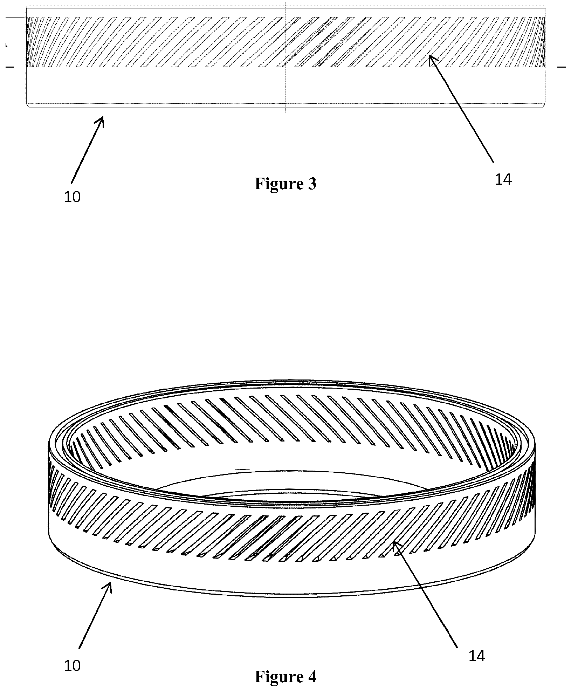

Conformément aux figures 3 et 4, les fentes (14) du stator (10) sont inclinées par rapport au plan horizontal du dispositif. Les caractéristiques dimensionnelles du stator sont mentionnées dans le tableau ci-après.

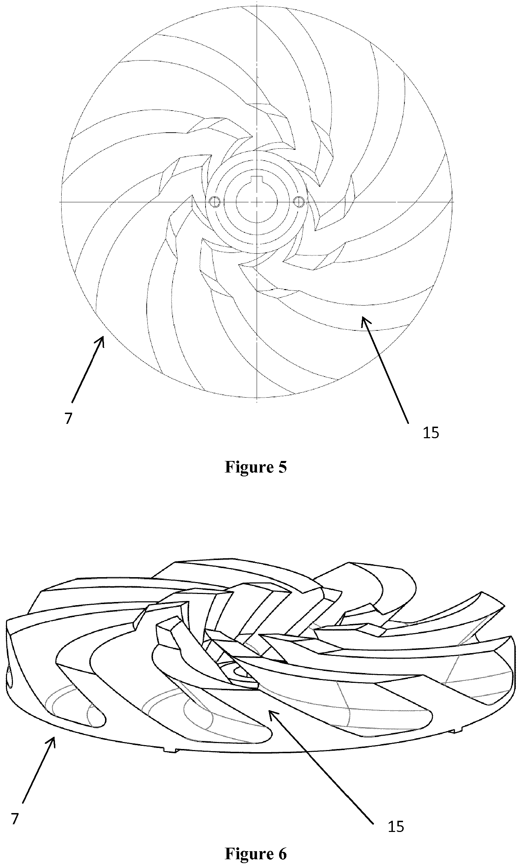

Conformément aux figures 5 et 6, les couteaux (15) d'un rotor (7) ne faisant pas partie de la présente invention sont inclinés par rapport au plan horizontal du dispositif. Comme le montrent ces figures, la face latérale des couteaux en regard du stator est courbe de manière à ce que la distance séparant les deux éléments est sensiblement constante. De même, la face inclinée de chaque couteau reliant le centre du rotor à la périphérie est de forme générale arrondie.

Un dispositif selon l'invention dans lequel les fentes sont inclinées à 45° par rapport au plan horizontal du stator et des couteaux perpendiculaires au plan horizontal du stator, est comparé avec le dispositif selon l'exemple du document WO 2011/107683 dans lequel les fentes et les couteaux sont perpendiculaires au plan horizontal du stator.

Les vibrations des appareils en fonctionnement ont été mesurées grâce à un mesureur de vibration PCE-VT 1000. Les vibrations sont exprimées en mm/s. Plus la valeur est faible moindres sont les vibrations. Des valeurs inférieures à 1 sont caractéristiques d'un bon résultat en termes de vibrations. Des valeurs inférieures à 1.8 sont néanmoins acceptables. Les résultats ont été consignés dans le tableau suivant :

| | **PSU 300 selon le document** WO 2011/107683 | **PSU 300 selon l'invention** |
|---|---|---|
| Diamètre de coupe (mm) | 200 | 200 |
| Nombre de fentes | 110 | 110 |
| Hauteur des fentes (mm) | 16.6 | 16,6 |
| Largeur des fentes (micron) | 200 | 200 |
| Inclinaison des fentes par rapport au plan horizontal | 0° | 45° |
| Nombre de couteaux (rotor) | 9 | 9 |
| Puissance moteur (KW) | 7,5 | 7,5 |
| Vitesse rotor (t/min) | 4500 | 4500 |
| Vibrations (mm/s) | 2.8 | 0.46 |
| Débit maximum d'eau primaire (m³/h) | 15 | 17 |
| Débit d'eau secondaire (m³/h) | 20 | 23 |
| Débit de poudre (mode continu) kg/h | 300 | 450 |

L'inclinaison des fentes de 45° dans l'appareil selon l'invention permet une diminution importante des vibrations de 2.8 mm/s à 0.45 mm/s, soit une diminution de 84% des vibrations. La durée de vie des roulements est ainsi fortement augmentée.

On remarque également que cela permet d'augmenter les débits de poudre de polyacrylamide dissous de 300 kg/h à 450 kg/h en mode continu, c'est-à-dire lorsque l'appareil fonctionne de manière continue pendant une période longue de plusieurs jours ou plusieurs semaines.

Ce débit peut être ponctuellement augmenté à un débit dit « maximum », pendant une période courte lorsque cela est nécessaire.

L'appareil selon l'invention permet d'augmenter le débit de solution de polymère à 40 m³/h et d'atteindre une quantité maximum de poudre de 550 kg/h sans blocage de l'appareil.

D'autres dispositifs dans lesquels les fentes sont inclinées de 10°, 30°, 60° et 80° par rapport au plan horizontal du stator ont été testés, les couteaux restant non inclinés. Les valeurs de vibrations mesurées ont été respectivement de 2.5 mm/s, 0.8 mm/s, 0.9 mm/s, 1.6 mm/s.

Une baisse significative des vibrations est observée lorsque l'angle d'inclinaison des fentes par rapport au plan horizontal du stator est supérieur à 20°. De meilleurs résultats sont obtenus pour des angles compris entre 30 et 70°.

Cette solution consistant à incliner seulement les fentes du stator est la plus simple au point de vue usinage. Cependant, un rotor à couteaux inclinés a également été testé qui a donné des résultats similaires de vibration et en débit.

## Revendications

1. Dispositif pour la mise en dispersion d'un polymère hydrosoluble de granulométrie inférieure à 1.5 mm comprenant :
- un cône de mouillage (1) dans lequel est dosé le polymère, ledit cône (1) étant connecté à un circuit d'arrivée d'eau primaire (3),
- à l'extrémité inférieure du cône :
o une chambre de broyage (6) et d'évacuation du polymère dispersé comprenant :
▪ un rotor (7) entraîné par un moteur (8) et muni de couteaux (9), les couteaux (9) du rotor (7) étant perpendiculaires par rapport au plan horizontal du stator (10)
▪ un stator (10) fixe comprenant des fentes rectilignes et parallèles les unes avec les autres,
o sur toute ou partie de la périphérie de la chambre(6), une couronne (11) alimentée par un circuit d'eau secondaire (12), la couronne (11) communiquant avec la chambre (6) de telle sorte à assurer la pulvérisation d'eau sous pression sur le stator (10),
**caractérisé en ce que** les fentes du stator (10) sont inclinées d'un angle compris entre 20° et 80° par rapport au plan horizontal du stator (10)..

2. Dispositif selon la revendication 1, **caractérisé en ce que** les fentes du stator (10) sont inclinées d'un angle compris entre 30 et 70° par rapport au plan horizontal du stator (10).

3. Dispositif selon l'une des revendications 1 à 2, **caractérisé en ce que** les fentes du stator (10) sont inclinées d'un angle compris entre 40 et 60° par rapport au plan horizontal du stator (10).

4. Dispositif selon l'une des revendications 1 à 3, **caractérisé en ce que** le stator (10) se présente sous la forme d'un cylindre dans la paroi duquel sont découpées des fentes réalisées sur partie de la hauteur de ladite paroi.

5. Dispositif selon l'une des revendications 1 à 4, **caractérisé en ce que** :
- les fentes du stator (10) ont une largeur comprise entre 50 et 1200 microns,
- la paroi du stator (10) a une épaisseur comprise entre 5 et 30 mm.,
- la hauteur du stator (10) est comprise entre 20 et 100 mm,
- le diamètre du stator (10) est compris entre 100 et 500 mm,
- le nombre de fentes du stator (10) est compris entre 50 et 1500,
- les fentes du stator (10) sont espacées régulièrement les unes des autres d'une distance comprise entre 1 et 50 mm,
- les fentes ont une longueur comprise entre 10 mm et 100 mm.

6. Dispositif selon l'une des revendications 1 à 5, **caractérisé en ce que** la distance séparant l'extrémité libre des couteaux (9) du rotor (7) des fentes du stator (10) est comprise entre 50 et 300 microns.

## Patentansprüche

1. Vorrichtung zum Dispergieren eines wasserlöslichen Polymers mit einer Partikelgröße von weniger als 1,5 mm, umfassend:
- einem Benetzungskegel (1), in dem das Polymer dosiert wird, wobei der Kegel (1) mit einem primären Wassereinlasskreislauf (3) verbunden ist,
- am unteren Ende des Kegels:
o eine Kammer zum Mahlen (6) und Ablassen des dispergierten Polymers, umfassend:
▪ einen von einem Motor (8) betriebenen und mit Blättern (9) versehenen Rotor (7), wobei die Blätter des Rotors (7) orthogonal zur Horizontalebene des Stators (10) sind,
▪ einen fixen Stator (10), der geradlinige Schlitze umfasst, die parallel zueinander sind,
o einen Ring (11) über die gesamte oder einen Teil des Umfangs der Kammer (6), der von einem sekundären Wasserkreislauf (12) gespeist wird, wobei der Ring (11) mit der Kammer (6) auf eine Weise in Verbindung steht, dass das Sprühen von unter Druck stehendem Wasser auf den Stator (10) sichergestellt wird,
**dadurch gekennzeichnet, dass** die Schlitze des Stators (10) in einem Winkel zwischen 20° und 80° bezogen auf die Horizontalebene des Stators (10) geneigt sind.

2. Vorrichtung nach Anspruch 1, **dadurch gekennzeichnet, dass** die Schlitze des Stators (10) in einem Winkel zwischen 30° und 70° bezogen auf die Horizontalebene des Stators (10) geneigt sind.

3. Vorrichtung nach einem der Ansprüche 1 bis 2, **dadurch gekennzeichnet, dass** die Schlitze des Stators (10) in einem Winkel zwischen 40° und 60° bezogen auf die Horizontalebene des Stators (10) geneigt sind.

4. Vorrichtung nach einem der Ansprüche 1 bis 3, **dadurch gekennzeichnet, dass** der Stator (10) die Form eines Zylinders aufweist, in dessen Wände Schlitze in einen Teil der Höhe der Wand geschnitten sind.

5. Vorrichtung nach einem der Ansprüche 1 bis 4, **dadurch gekennzeichnet, dass**:
- die Schlitze im Stator (10) eine Breite zwischen 50 und 1200 µm aufweisen,
- die Wand des Stators (10) eine Dicke zwischen 5 und 30 mm aufweist,
- die Höhe des Stators (10) zwischen 20 und 100 mm beträgt,
- der Durchmesser des Stators (10) zwischen 100 und 500 mm beträgt,
- die Anzahl an Schlitzen im Stator (10) zwischen 50 und 1500 beträgt,
- die Schlitze im Stator (10) in einem Abstand zwischen 1 und 50 mm regelmäßig voneinander beabstandet sind,
- die Schlitze eine Länge zwischen 10 mm und 100 mm aufweisen.

6. Vorrichtung nach einem der Ansprüche 1 bis 5, **dadurch gekennzeichnet, dass** der Abstand zwischen dem Ende der Blätter (9) des Rotors (7) und den Schlitzen im Stator (10) zwischen 50 und 300 µm beträgt.

## Claims

1. Device for dispersing a water-soluble polymer with a particle size of less than 1.5 mm composed of:
- a wetting cone (1) wherein the polymer is metered, said cone (1) being connected to a primary water inlet circuit (3),
- at the bottom end of the cone:
o a chamber for grinding (6) and draining the dispersed polymer including:
▪ a rotor (7) driven by a motor (8) and provided with blades (9), the blades of the rotor (7) being perpendicular to the horizontal plane of the stator (10),
▪ a fixed stator (10) including slots rectilinear and parallel to one another,
∘ over all or part of the periphery of the chamber (6), a ring (11) fed by a secondary water circuit (12), the ring (11) communicating with the chamber (6) in such a way as to guarantee the spraying of pressurized water onto the stator (10),
**characterized in that** the slots of the stator (10) are tilted at an angle between 20° and 80° relative to the horizontal plane of the stator (10).

2. Device according to claim 1, **characterized in that** the slots of the stator (10) are tilted at an angle of between 30° and 70° relative to the horizontal plane of the stator (10).

3. Device according to one of the claims from 1 to 2, **characterized in that** the slots of the stator (10) are tilted at an angle of between 40° and 60° relative to the horizontal plane of the stator (10).

4. Device according to one of the claims from 1 to 3, **characterized in that** the stator (10) has the form of a cylinder within the wall of which slots are cut into part of the height of said wall.

5. Device according to one of the claims from 1 to 4, **characterized in that:**
- the slots in the stator (10) have a width of between 50 and 1200 microns,
- the stator (10) wall has a thickness of between 5 and 30 mm,
- the height of the stator (10) is between 20 and 100 mm
- the diameter of the stator (10) is between 100 and 500 mm
- the number of stator (10) slots is between 50 and 1500,
- the slots in the stator (10) are regularly spaced apart at a distance of between 1 and 50 mm,
- the slots have a length of between 10 mm and 100 mm.

6. Device according to one of the claims from 1 to 5, **characterized in that** the distance separating the free end of the rotor (7) blades (9) and the stator (10) slots is between 50 and 300 microns.
